Europäisches Patentamt

European Patent Office

Office européen des brevets

(19)

(11) Veröffentlichungsnummer: **0 363 715 B1**

(12) **EUROPÄISCHE PATENTSCHRIFT**

(45) Veröffentlichungstag der Patentschrift: **01.06.94**

(51) Int. Cl.5: **H02M 3/07**

(21) Anmeldenummer: **89117649.7**

(22) Anmeldetag: **25.09.89**

(54) Integrierte Spannungsvervielfachschaltung für niedrige Versorgungsspannung.

(30) Priorität: **13.10.88 DE 3834927**

(43) Veröffentlichungstag der Anmeldung:
**18.04.90 Patentblatt 90/16**

(45) Bekanntmachung des Hinweises auf die Patenterteilung:
**01.06.94 Patentblatt 94/22**

(84) Benannte Vertragsstaaten:
**CH DE FR GB IT LI**

(56) Entgegenhaltungen:
**US-A- 4 279 010**
**US-A- 4 636 930**

**ELECTRONICS, vol. 53, no. 20, 30 September 1980, New York, US, Seiten 141-146; D. BINGHAM: "C-MOS makes voltage converter a paragon of efficiency"**

**PATENT ABSTRACTS OF JAPAN vol. 8, no. 95 (E-242)(1532) 2. Mai 1984 ; & JP-A-59 14360 (TOKYO SHIBAURA DENKI K. K.) 25 Januar 1984.**

**IEEE JOURNAL OF SOLID-STATE CIRCUITS, vol. 17, no. 4, 31 August 1982, New York, US, Seiten 778-780; S. SINGER: "Inductance-less**

**up DC-DC converter"**

(73) Patentinhaber: **SIEMENS AKTIENGESELL-SCHAFT**
**Wittelsbacherplatz 2**
**D-80333 München(DE)**

(72) Erfinder: **Mauthe, Manfred, Dipl.-Ing.**
**Kranichweg 34**
**D-8000 München 82(DE)**

## Beschreibung

Die Erfindung bezieht sich auf eine Schaltung zur Spannungsvervielfachung nach dem Oberbegriff des Patentanspruchs 1.

Hörgeräte nach dem Stande der Technik enthalten eine Vielzahl von einzelnen Komponenten wie beispielsweise rauscharme Vorverstärker, SC-Filterschaltungen und auch einen Spannungsversorgungsteil. Um bei batteriebetriebenen "switched capacitor"-Filterschaltungen (SC-Filterschaltungen) das Signal/Rauschleistungsverhältnis zu verbessern, kann man den Aussteuerbereich der Filterschaltung durch eine Verdoppelung der Versorgungsspannung erhöhen. Üblicherweise liegt die Versorgungsspannung von Hörgeräten im Bereich von 1 bis 1,5 Volt, so daß eine Verdoppelung auf 2 bis 3 Volt mit Hilfe zusätzlicher Batteriezellen aufgrund der räumlich beengten Verhältnisse in einem Hörgerätegehäuse auf zusätzliche Schwierigkeiten stößt.

Aus der technischen Literatur sind eine Vielzahl von Spannungsvervielfachungsschaltungen speziell für den Hörgerätesektor bekannt wie beispielsweise "A 1,5 Volt Single-Supply One-Transistor CMOS EEProm" von B. Gerber et al, IEEE, Sc-16, No. 3, June 1981, Seiten 195 bis 199 und von John F. Dickson "One Chip High Voltage Generation In NMOS-Integrated Circuits Using An Improved Voltage Multiplier Technique", IEEE, Sc-11, No. 3, June 1976, auf Seite 374 bis 378, sowie von S. Singer "Inductance-Less Up DC-DC Convertor", IEEE Sc-17, No. 4, August 1982, auf Seite 778 bis 780. Alle diese bisherigen Spannungsvervielfacherschaltungen verwenden Dioden oder als Dioden geschaltete Transistoren. Eine Spannungsvervielfacherschaltung für kleine Spannungen wird vorteilhafterweise jedoch mit Transistorschalter aufgebaut. Da eine Diode erst bei Überschreiten der Schwellspannung leitend wird, muß bei einer solchen Schaltung die Versorgungsspannung ein Mehrfaches über dieser Schwellspannung liegen, damit eine Spannungserhöhung zustandekommt. Dagegen kann ein Transistor in einem eingeschalteten Zustand als niederohmiger Widerstand angesehen werden, längs dessen nach erfolgtem Ladungsausgleich kein Spannungsabfall vorhanden ist. In der europäischen Patentanmeldung EP-A-135889 "Schaltung zur Spannungsvervielfachung" ist eine Spannungsvervielfacherschaltung in CMOS-Technologie angegeben. Diese Schaltung erzeugt zu einer gegebenen Spannung eine positive, im verlustfreien Leerlauf eine doppelt so hohe Spannung.

In der Veröffentlichung von F. Callias et al "A Set of 4 IC's in CMOS-Technology for a programmable hearing aid", IEEE, 1988, Custom Integrated Circuit Conference, Seite 2 bis 5, ist in Figur 3 eine Spannungsverdreifachungsschaltung in CMOS-Technologie angegeben, bei der zu einer gegebenen positiven Spannung eine negative Spannung erzeugt wird. In Figur 3 der genannten Veröffentlichung weist die Spannungsverdreifachungsschaltung einen Pegelumsetzer, eine Ansteuerschaltung sowie ein dreistufiges Kapazitätsnetzwerk auf, wobei die Ansteuerschaltung zwischen dem Pegelumsetzer und dem dreistufigen Kapazitätsnetzwerk angeschlossen ist.

In der US-Patentschrift 4,636,930 ist eine integrierte Schaltung gezeigt, die eine Spannungsverdoppler-Ladungspumpschaltung enthält und zur Konvertierung einer unipolaren Versorgungsspannung in eine bipolare Versorgungsspannung, bei der beide Einzelversorgungsspannungen gegenüber Bezugspotential jeweils größer als die Ausgangsversorgungsspannung sind, geeignet ist.

Aus dem Artikel "C-Mos makes voltage converter a paragon of efficiency" in der Zeitschrift electronics, Sept. 11, 1980, Seiten 141 bis 146 ist eine integrierte Schaltung eines Spannungsumsetzers bekannt, der einen Pegelumsetzer, einen Inverter und MOS-Transistoren beinhaltet und eine sehr gute Umsetzgenauigkeit aufweist.

Der Erfindung liegt die Aufgabe zugrunde, eine weitere Schaltung in CMOS-Technologie anzugeben, welche zu einer gegebenen Spannung eine negative Spannung erzeugt. Das wird erfindungsgemäß bei einer Ausbildung der Schaltung nach dem kennzeichnenden Teil des Patentanspruchs 1 erreicht.

Der mit der Erfindung erzielbare Vorteil liegt insbesondere darin, daß in einer Realisierung beide Taktphasen ausgenutzt werden können. Die Stromergiebigkeit wird hierbei erhöht und die Spannungsänderung während einer Taktphase an einem Glättungskondensator verringert.

Die Ansprüche 2 bis 8 sind auf vorteilhafte Ausgestaltungen und Weiterbildungen der Erfindung gerichtet.

Die Erfindung wird nachfolgend anhand der Zeichnungen näher erläutert. Dabei zeigen:

Figur 1    die erfindungsgemäße Schaltung zur Spannungsvervielfachung in zweistufiger Ausführung,

Figur 2    eine weitere erfindungsgemäße Schaltung zur Spannungsvervielfachung in vierstufiger Ausführung,

Figur 3    die Realisation des Pegelumsetzers zum Betrieb der erfindungsgemäßen Spannungsvervielfachungsschaltungen.

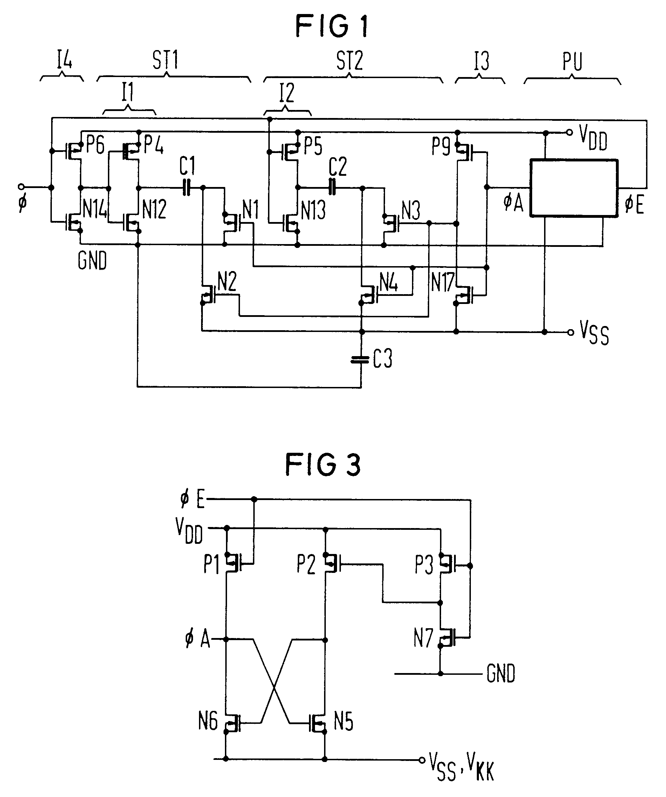

Die erfindungsgemäße Spannungsvervielfachungsschaltung nach Figur 1 enthält eine erste und zweite Stufe ST1, ST2, die mit Hilfe einer vierten Inverterstufe I4 sowie eines Pegelumsetzers PU mit angeschlossener dritter Inverterstufe I3 angesteuert wird. Jede der beiden Stufen enthält eine Inverterschaltung, eine Kapazität sowie zwei n-Kanal-Feldeffekttransistoren. Die Kapazität ist hierbei mit einem ersten Anschluß an den Ausgang der Inverterstufen und mit einem zweiten Anschluß über einen der beiden n-Kanal-Feldeffekttransistoren mit Masse GND verbunden. Der weitere Transistor ist zwischen einem zweiten Bezugspotential $V_{SS}$ und dem zweiten Anschluß der Kapazität verschaltet, wobei das zweite Bezugspotential $V_{SS}$ mit dem Ausgang der Spannungsvervielfachungsschaltung verbunden ist.

Die Versorgungsspannung wird zwischen der Masse GND und der Zuleitung mit dem ersten Bezugspotential $V_{DD}$ angelegt, während man mit Hilfe der Spannungsvervielfachungsschaltung eine Spannung auf dem zweiten Bezugspotential mit $V_{SS} = - V_{DD}$ (bezogen auf Masse GND) erzeugen kann. Hierzu wird in der ersten Taktphase die Kapazität am ersten Anschluß auf das erste Bezugspotential $V_{DD}$ aufgeladen und gleichzeitig am zweiten Anschluß über einen der beiden Feldeffekttransistoren mit Masse GND verbunden. In der darauffolgenden Taktphase sperrt dieser Transistors und über die Inverterstufe wird der erste Anschluß vom ersten Bezugspotential $V_{DD}$ auf Masse GND entladen, so daß der zweite Anschluß von Masse GND auf minus $V_{DD}$ absinkt. Während dieser Taktphase leitet der zwischen dem zweiten Anschluß und dem zweiten Bezugspotential $V_{SS}$ geschaltete Feldeffekttransistor und überträgt die Ladung von der Kapazität C1 auf eine weitere Glättungskapazität C3. Diese Glättungskapazität ist zwischen dem zweiten Bezugspotential $V_{SS}$ und der Masse GND angeschlossen. Der angegebene Zyklus wiederholt sich mit der nächsten Taktperiode und das Bezugspotential $V_{SS}$ wird immer negativer bis die Spannung $-V_{DD}$ erreicht ist. Während nun in der ersten Taktperiode die Kapazität C1 in der ersten Stufe aufgeladen wird, kann die bereits aufgeladene Kapazität C2 in der zweiten Stufe ihre Ladung am Glättungskondensator abgeben. Hierdurch ist es möglich beide Taktphasen ausnutzen zu können, was die Stromergiebigkeit erhöht und die Spannungsänderung während einer Taktphase am Glättungskondensator C3 verringert. Die Spannung zwischen dem zweiten Anschlußpunkt der Kapazität C1 und dem zweiten Bezugspotential $V_{SS}$ bewegt sich zwischen 0 Volt = Masse GND und $-V_{DD}$. Die beiden Feldeffekttransistoren jeweils in der ersten und zweiten Stufe müssen also so angesteuert werden, daß sie bei einer Spannung von $-V_{DD}$ sicher sperren. Dies ist der Fall, wenn der Gateanschluß unter der Spannung von $-V_{DD} + V_{Tn}$ liegt. Hierbei bezeichnet die Spannung $V_{Tn}$ die Einsatzspannung eines n-Kanal-Feldeffekttransistors. Mit dem Pegelumsetzer PU und der angeschlossenen dritten Inverterschaltung I3 wird der Lowpegel von Masse GND nach dem zweiten Bezugspotential $V_{SS}$ = $-V_{DD}$ verschoben. Dies geschieht dadurch, daß der Pegelumsetzer PU ausgangsseitig von der erzeugten Spannung $V_{SS}$ versorgt wird. Im allgemeinen kann man davon ausgehen, daß der Glättungskondensator C3 beim Einschalten entladen ist, da ihm parallel noch eine ohmsche Last in Form eines Verbrauchers geschaltet ist. Dann arbeitet der Pegelumsetzer sofort und eine Spannungsvervielfachung wird erreicht.

Im einzelnen ist die Spannungsvervielfachungsschaltung nach Figur 1 wie folgt aufgebaut. Die erste Stufe ST1 der Spannungsvervielfachungsschaltung enthält eine erste Inverterstufe I1, eine erste Kapazität C1 sowie einen ersten und zweiten n-Kanal-Feldeffekttransistor N1 und N2. Der Ausgang der ersten Inverterstufe I1 ist hierbei auf einen ersten Anschluß der Kapazität C1 und der zweite Anschluß der Kapazität C1 ist über den ersten n-Kanal-Feldeffekttransistor N1 mit Masse GND verbunden. Der zugehörige Substratanschluß zum ersten n-Kanal-Feldeffekttransistor N1 wird hierbei ebenfalls auf den zweiten Anschluß der Kapazität geschaltet. Weiterhin ist der zweite n-Kanal-Feldeffekttransistor N2 zwischen dem zweiten Anschluß der Kapazität C1 und einem ersten Anschluß der Glättungskapazität C3 verschaltet. Auch der Substratanschluß des zuletzt genannten Feldeffekttransistor ist mit dem ersten Anschluß der Glättungskapazität C3 zu verbinden. Die Glättungskapazität C3 selbst ist mit ihrem zweiten Anschluß mit der Masse GND anzuschließen und sorgt für eine geringe Welligkeit der Ausgangsspannung. Die Inverterstufe I1 enthält einen vierten p-Kanal-Feldeffekttransistor P4 und einen zwölften n-Kanal-Feldeffekttransistor N12 wobei beide Gateanschlüsse gemeinsam mit dem Ausgang der vierten Inverterstufe I4 verschaltet sind und beide ersten Anschlüsse gemeinsam den Ausgang der ersten Inverterstufe bilden. Weiterhin ist in der Inverterstufe I1 der Substratanschluß und der zweite Anschluß des zwölften n-Kanal-Feldeffekttransistors N12 mit der Masse GND und der zweite Anschluß und Substratanschluß des vierten p-Kanal-Feldeffekttransistors P4 mit dem ersten Bezugspotential $V_{DD}$ verschaltet.

Die zweite Stufe ST2 ist ähnlich wie die erste Stufe ST1 aufgebaut und erhält eine zweite Inverterstufe I2, gebildet mit Hilfe eines fünften p-Kanal-Feldeffekttransistors P5 und eines dreizehnten n-Kanal-Feldeffekttransistors N13, einer Kapazität C2 und den dritten und vierten n-Kanal-Feldeffekttransistor N3 und N4. Auch hierbei ist die Kapazität C2 zwischen dem Ausgang der Inverterstufe I2 und über den dritten n-Kanal-Feldeffekttransistor N3 mit Masse GND und über den n-Kanal-Feldeffekttransistor N4 mit dem zweiten Bezugspotential $V_{SS}$ verbunden. Die beiden Gateanschlüsse des fünften p-Kanal-Feldeffekttransistors P5 und des dreizehnten n-Kanal-Feldeffekttransistors N13 der zweiten Inverterstufe I2 bilden den Eingang der zweiten Inverterstufe I2 und sind im Gegensatz zur ersten Inverterstufe I1 mit dem Eingang der vierten Inverterstufe I4 verschaltet.

Zur Ansteuerung der beiden Stufen ST1 und ST2 über den Inverter I4 verfügt dieser über einen sechsten p-Kanal-Feldeffekttransistor P6 und einen vierzehnten n-Kanal-Feldeffekttransistor N14, wobei der Substratanschluß und ein erster Anschluß des n-Kanal-Feldeffekttransistors N14 mit der Masse GND und ein erster Anschluß und ein Substratanschluß des sechsten p-Kanal-Feldeffekttransistors P6 mit dem ersten Bezugspotential $V_{DD}$ verschaltet ist, während die beiden Gateanschlüsse der zuletzt genannten Feldeffekttransistoren den Eingang der vierten Inverterstufe I4 und den Takteingang Ø bilden. Der Ausgang der vierten Inverterstufe I4 wird mit Hilfe der zweiten Anschlüsse jeweils des sechsten p-Kanal-Feldeffekttransistors P6 und des vierzehnten n-Kanal-Feldeffekttransistors N14 gebildet.

Die Pegelumsetzerschaltung PU ist mit dem Eingang der vierten Inverterstufe I4 bzw. mit dem Takteingang Ø, mit der Masse GND, mit dem ersten Bezugspotential $V_{DD}$ und dem zweiten erzeugten Bezugspotential $V_{SS}$ verbunden und ist weiterhin mit seinem Taktausgang ØA auf die beiden Gateanschlüsse des neunten n-Kanal-Feldeffekttransistors N9 und des siebzehnten p-Kanal-Feldeffekttransistors P17 verbunden. Beide Feldeffekttransistoren bilden die dritte Inverterstufe I3. Hierbei ist ein Substratanschluß und ein erster Anschluß des neunten p-Kanal-Feldeffekttransistors P9 mit dem ersten Bezugspotential $V_{DD}$ und ein erster Anschluß und Substratanschluß des siebzehnten n-Kanal-Feldeffekttransistors N17 an das zweiten Bezugspotential $V_{SS}$ angeschlossen. Der Ausgang der dritten Inverterstufe I3 wird mit Hilfe der zweiten Anschlüsse der beiden zuletzt genannten Feldeffekttransistoren gebildet und ist auf den Gateanschluß des dritten n-Kanal-Feldeffekttransistors N3 und den Gateanschluß des zweiten n-Kanal-Feldeffekttransistors N2 angeschlossen. Weiterhin ist der Gateanschluß des ersten n-Kanal-Feldeffekttransistors N1 und der Gateanschluß des vierten n-Kanal-Feldeffekttransistors N4 mit dem Taktausgang ØA des Pegelumsetzers PU zu verbinden.

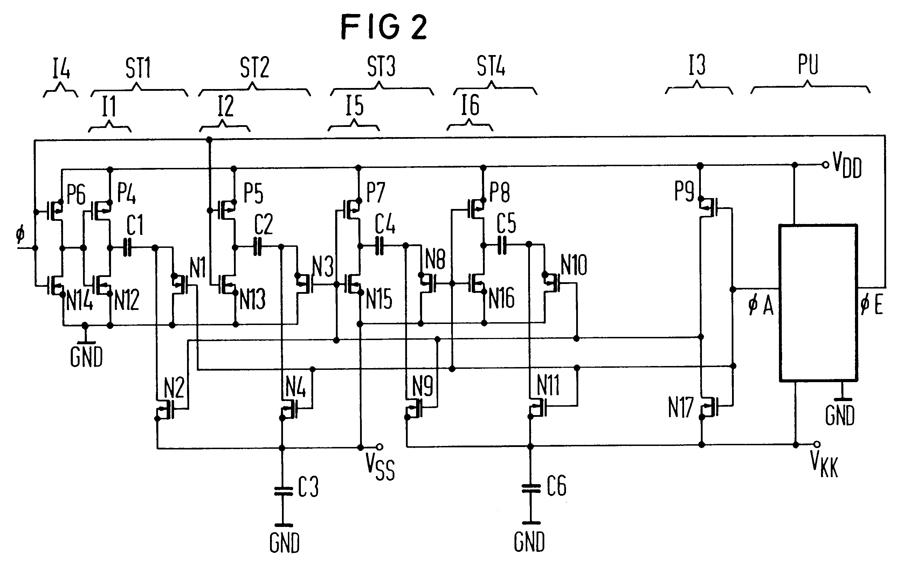

Will man anstatt einer Spannungsverdopplung eine mehrfache Erhöhung der Spannung, so sind mehr als zwei Stufen hintereinander zu schalten. Eine vierstufige Schaltung, welche die Ausgangsspannung $V_{KK} = - 3 \times V_{DD}$ erzeugt ist hierfür in Figur 2 gezeigt. Der Pegelumsetzer PU zur Ansteuerung der einzelnen Stufen über den dritten Inverter I3 wird lediglich einmal benötigt und ist deshalb an die negativste Spannung, in diesem Fall $V_{KK}$, angeschlossen. Die Verschaltung der einzelnen Stufen ST1 und ST2 deren Realisierung und die Realisierung der Inverterstufen I3 und I4 ist wie in der zweistufigen Spannungsvervielfachungsschaltung nach Figur 1 vorzunehmen. Gleiche Komponenten wie in Figur 1 sind in der vierstufigen Ausführung der Spannungsvervielfachungsschaltung mit den gleichen Bezugszeichen versehen.

Der Aufbau der dritten und vierten Stufe ST3 und ST4 ist ähnlich der beiden ersten Stufe ST1 und ST2. In der dritten Stufe ST3 ist eine Inverterstufe I5, eine Kapazität C4 sowie zwei n-Kanal-Feldeffekttransistoren N8 und N9 enthalten. Ein erster Anschluß der vierten Kapazität C4 ist mit einem Ausgang der fünften Inverterstufe I5 und mit einem zweiten Anschluß über den achten n-Kanal-Feldeffekttransistor N8 mit dem zweiten Bezugspotential $V_{SS}$ verbunden. Der Substratanschluß des achten n-Kanal-Feldeffekttransistors N8 ist ebenfalls an den zweiten Anschluß der Kapazität C4 angeschlossen. Der neunte n-Kanal-Feldeffekttransistor N9 ist zwischen dem dritten Bezugspotential $V_{KK}$, welches die negativste Spannung in der Schaltung von Figur 2 darstellt, und dem zweiten Anschluß der vierten Kapazität C4 verschaltet, wobei der Substratanschluß des neunten n-Kanal-Feldeffekttransistors N9 ebenfalls an $V_{KK}$ angeschlossen ist. Die Inverterstufe I5 wird wieder mit Hilfe zweier komplementärer Feldeffekttransistoren P7 und N15 aufgebaut, wobei ein erster Anschluß von P7 und N15 den Ausgang der Inverterstufe I5 bilden und die Gateanschlüsse beider Feldeffekttransistoren den Eingang der fünften Inverterstufe I5 darstellen, der zum einen mit den Gateanschlüssen des n-Kanal-Feldeffekttransistors N3, den n-Kanal-Feldeffekttransistor N9 und des n-Kanal-Feldeffekttransistors N2 zum anderen mit dem Ausgang der fünften Inverterstufe I3 verbunden ist. Weiterhin ist die Inverterstufe I5 zwischen dem ersten Bezugspotential $V_{DD}$ und dem zweiten Bezugspotential $V_{SS}$ geschaltet, wobei der zweite Anschluß und der Substratanschluß des p-Kanal-Feldeffektransistors P7 mit dem ersten Bezugspotential $V_{DD}$ und der Substratanschluß und zweite Anschluß des N-Kanal-Feldeffekttransistors N15 mit dem zweiten Bezugspotential $V_{SS}$ verschaltet ist. Der Aufbau der an der dritten Stufe ST3 angeschlossenen vierten Stufe ST4 ist ähnlich vorzunehmen. Sie besteht aus der sechsten Inverterstufe I6, der fünften Kapazität C5 und den beiden n-Kanal-Feldeffekttransistoren N10 und N11. Der erste Anschluß der Kapazität C5 ist wiederum mit dem Ausgang der sechsten Inverterstufe I6 verbunden und der zweite Anschluß der Kapazität C5 ist über den zehnten n-Kanal-Feldeffekttransistor N10 mit dem ersten Bezugspotential $V_{SS}$ verschaltet. Ebenfalls angeschlossen an den zweiten Anschluß der Kapazität C5 ist der Substratanschluß und der zweite Anschluß ist über den n-Kanal-Feldeffekttransistor N11 mit dem dritten Bezugspotential $V_{KK}$ verbunden. Außerdem angeschlossen an das dritte Bezugspotential $V_{KK}$ ist der Substratanschluß desselbigen Feldeffekttransistors. Eine in der ersten und zweiten Stufe analoge Kapazität C3 stellt die Kapazität C6 für die beiden Stufen ST3 und ST4 dar, welche zwischen der Masse GND und dem dritten Bezugspotential $V_{KK}$ verschaltet ist. Beide Kapazitäten C3 und C6 dienen zur Glättung des Ausgangssignals und sind bei einem angeschlossenen Verbraucher mit kapazitiven Eigenschaften nicht unbedingt erforderlich. Die sechste Inverterstufe I6 enthält einen n- und einen p-Kanal-FeldeffekttransistorP8 und N16 wobei der Substratanschluß und der erste Anschluß von N16 mit dem zweiten Bezugspotential $V_{SS}$ und der erste Anschluß und Substratanschluß von P8 mit dem ersten Bezugspotential $V_{DD}$ verschalten ist. Die beiden Gateanschlüsse von P8 und N16 sind mit dem Gateanschluß des achten n-Kanal-Feldeffekttransistors N8 und mit den Gateanschlüssen von N1, N4 und N11 zu verbinden. Der Ausgang der sechsten Inverterstufe I6 wird jeweils aus dem zweiten Anschluß von P8 und N16 gemeinsam gebildet. Zur Ansteuerung der n-Kanal-Feldeffekttransistoren N1 bis N4 und N8 bis N11 sind die Gateanschlüsse mit dem Ausgang der dritten Inverterstufe I3 bzw. mit dem Taktausgang ØA des Pegelumsetzers zu verschalten. Diese Transistoren müssen so angesteuert werden, daß sie bei einer Spannung von -3 $V_{DD}$ sicher sperren. Dies ist sicher der Fall, wenn ihr Gateanschluß unter der Spannung von -3 x $V_{DD}$ + $V_{TN}$ liegt (mit $V_{TN}$ wird wiederum die Einsatzspannung eines n-Kanal-Feldeffekttransistors bezeichnet). Mit dem Pegelumsetzer PU wird der Lowpegel von Masse GND nach $V_{KK}$ = 3 x -$V_{DD}$ verschoben. Dies geschieht dadurch, daß der Pegelumsetzer ausgangsseitig von der erzeugten Spannung $V_{KK}$ versorgt wird. Im einzelnen ist der Taktausgang ØA des Pegelumsetzers mit dem Gateanschluß des ersten n-Kanal-Feldeffekttransistors N1, mit der des vierten n-Kanal-Feldeffekttransistors N4 mit der des achten n-Kanal-Feldeffekttransistors N8 sowie mit dem Gateanschluß des elften n-Kanal-Feldeffekttransistors N11 zu verbinden. Weiterhin angeschlossen am Taktausgang ØA des Pegelumsetzers ist der Eingang der sechsten Inverterstufe I6. Am Ausgang der dritten Inverterstufe I3 ist der Gateanschluß des zweiten n-Kanal-Feldeffekttransistors N2, der Gateanschluß des dritten n-Kanal-Feldeffekttransistors N3, der Gateanschluß des neunten und der des zehnten n-Kanal-Feldeffekttransistors N9 und N10 anzuschließen. Weiterhin verbunden mit dem Ausgang der dritten Inverterstufe I3 ist der Eingang der fünften Inverterstufe I5.

Der Ausgang dieser vierstufigen Spannungsvervielfachungsschaltung ist mit dem dritten Bezugspotential $V_{KK}$ zu verbinden, wobei an diesem dritten Bezugspotential eine Spannung von $V_{KK}$ gleich - 3 x $V_{DD}$ auftritt. In den ersten beiden Stufen ST1 und ST2 wird eine Spannung von $V_{SS}$ = - $V_{DD}$ aufgebaut, die an die dritte und vierte Stufe ST3 und ST4 weitergegeben und hier schließlich die Spannung von $V_{KK}$ = -3 x $V_{DD}$ erzeugt. In der folgenden Figur 3 ist nun die Realisierung des Pegelumsetzers PU beschrieben, der in den Spannungsvervielfacherschaltung nach Figur 1 und Figur 2 Verwendung findet.

Der Pegelumsetzer PU nach Figur 3 enthält drei n-Kanal-Feldeffekttransistoren N5, N6 sowie N7 sowie drei p-Kanal-Feldeffekttransistoren P1, P2 und P3. Hierbei ist der p-Kanal-Feldeffekttransistor P3 und der n-Kanal-Feldeffekttransistor N7 als Inverter verschaltet und die beiden n-Kanal-Feldeffekttransistoren N5 und N6 bilden eine bistabile Kippschaltung. Der Takt alterniert zwischen einer positiven Spannung (beispielsweise $V_{DD}$ und der Masse GND = 0 Volt, so daß am Gateanschluß des p-Kanal-Feldeffekttransistors P1 während der ersten Hälfte einer Taktperiode ein positives Spannungssignal anliegt und den Feldeffekttransistor sperrt. Der p-Kanal-Feldeffekttransistor P2 hingegen ist im leitenden Zustand, da er mit seinem Gateanschluß über die durch P3 und N7 gebildete Inverterstufe invers mit dem gleichen Takt angesteuert ist. Der Gateanschluß des n-Kanal-Feldeffekttransistors N6 ist nun über den p-Kanal-Feldeffekttransistor P2 mit einer positiven Spannung $V_{DD}$ verschaltet, so daß P6 leitet und den Ausgang ØA des Pegelumset zers auf die Spannung $V_{SS}$ bzw. $V_{KK}$ legt. In diesem Falle befindet sich der n-Kanal-Feldeffekttransistor N5 im gesperrten Zustand. In der zweiten Hälfte der Taktperiode ist die Spannung auf der Taktleitung ØE = 0 Volt und der Feldeffekttransistor P1 leitet. Da die Taktleitung auch auf den Feldeffekttransistor P3 und N7 geschaltet ist, leitet der p-Kanal-Feldeffekttransistor P3 und der n-Kanal-Feldeffekttransistor N7 sperrt in diesem Falle. Daher ist auch der Gateanschluß des P2-Feldeffekttransistors auf eine positiven Spannung $V_{DD}$ gelegt und sperrt den Transistor. In diesem Fall befindet sich am Taktausgang ØA und am Gateanschluß des n-Kanal-Feldeffekttransistors N5 die positive Spannung $V_{DD}$. Es leitet der n-Kanal-Feldeffekttransistor N5 und sperrt hiermit den sechsten n-Kanal-Feldeffekttransistor N6, da an dessen Gateleitung das negative Bezugspotential $V_{SS}$ bzw. $V_{KK}$ geschaltet wird. Am Taktausgang ØA ergibt sich hieraus eine Rechteckspannung, die im Takte der Rechteckspannung auf der Taktleitung zwischen dem ersten Bezugspotential $V_{DD}$ und dem jeweiligen zweiten bzw. dritten Bezugspotential $V_{SS}$, $V_{KK}$ alterniert.

Im einzelnen ist die Verschaltung des Pegelumsetzers wie folgt vorzunehmen. Ein erster Anschluß und ein Substratanschluß des fünften n-Kanal-Feldeffekttransistors N5 und ein erster Anschluß und Substratanschluß des sechsten n-Kanal-Feldeffekttransistors N6 sind gemeinsam mit dem Ausgang der Spannungsvervielfachungsschaltung bzw. dem zweiten oder dritten Bezugspotential $V_{SS}$, $V_{KK}$ verschaltet und ein Gateanschluß des fünften n-Kanal-Feldeffekttransistors N5, ein zweiter Anschluß des sechsten n-Kanal-Feldeffekttransistors N6 und ein erster Anschluß des ersten p-Kanal-Feldeffekttransistors P1 bilden gemeinsam den Taktausgang ØA des Pegelumsetzers. Ein Gateanschluß des sechsten n-Kanal-Feldeffekttransistors N6 ist mit einem zweiten Anschluß des fünften n-Kanal-Feldeffekttransistors N5 und mit einem ersten Anschluß des zweiten p-Kanal-Feldeffekttransistors P2 zu verbinden und ein erster Anschluß und Substratanschluß des siebten n-Kanal-Feldeffekttransistors ist auf Masse GND zu legen. Ein zweiter Anschluß desselbigen Transistors ist mit dem Gateanschluß des zweiten p-Kanal-Feldeffekttransistors P2 und einem ersten Anschluß des dritten p-Kanal-Feldeffekttransistors P3 zu verbinden und ein zweiter Anschluß und Substratanschluß des dritten p-Kanal-FeldeffekttransistorsP3, ein zweiter Anschluß und Substratanschluß des zweiten p-Kanal-Feldeffekttransistors P2 und ein zweiter Anschluß und Substratanschluß des ersten p-Kanal-Feldeffekttransistors P1 ist mit dem ersten Bezugspotential $V_{DD}$ zu verschalten. Die Ansteuerung erfolgt über die Taktleitung am Takteingang ØE, wobei der Gateanschluß des dritten p-Kanal-Feldeffekttransistors P3 und der Gateanschluß des siebten n-Kanal-Feldeffekttransistors N7 an die Taktzuleitung anzuschließen sind.

Im Falle einer Erzeugung von positiven Spannungen bei gegebener negativer Spannung sind in den Spannungsvervielfacherschaltun gen nach Figur 1 und 2 sämtliche n- und p-Kanal-Feldeffekttransistoren zu vertauschen, wobei das erste Bezugspotential $V_{DD}$ mit einer negativen Spannung zu versehen ist und das zweite und dritte Bezugspotential $V_{SS}$, $V_{KK}$ eine positive Spannung liefert.

**Patentansprüche**

1. Mehrstufige Spannungsvervielfachungsschaltung mit einem Pegelumsetzer (PU) und angeschlossener Inverterstufe (I3), wobei die erste Stufe (ST1) der mehrstufigen Spannungsvervielfachungsschaltung eine erste Kapazität (C1), eine erste Inverterstufe (I1), und einen und zweiten Feldeffekttransistor (N1, N2) ersten Typs enthält, wobei einer erster Anschluß der ersten Kapazität (C1) mit einem Ausgang der ersten Inverterstufe (11) und ein zweiter Anschluß der ersten Kapazität (C1) über den ersten Feldeffekttransistor ersten Typs (N1) mit Masse (GND) verbunden ist, wobei der zweite Anschluß der ersten Kapazität (C1) über den zweiten Feldeffekttransistor des ersten Typs (N2) mit einem zweiten Bezugspotential ($V_{SS}$) und die erste Inverterstufe (I1) zwischen dem ersten Bezugspotential ($V_{DD}$) und Masse (GND) geschaltet ist, wobei ein Eingang der ersten Inverterstufe (I1) einen Eingang der ersten Stufe und ein Gateanschluß des ersten Feldeffekttransistors ersten Typs (N1) einen ersten Steuereingang und ein Gateanschluß des zweiten Feldeffekttransistors ersten Typs (N2) einen zweiten Steuereingang der ersten Stufe bilden, wobei ein Substratanschluß des ersten Feldeffekttransistors ersten Typs (N1) mit dem zweiten Anschluß der ersten Kapazität (C1) und ein Substratanschluß des zweiten Feldeffekttransistors des ersten Typs (N2) mit dem zweiten Bezugspotential ($V_{SS}$) verschaltet ist, **dadurch gekennzeichnet,** daß eine zweite Stufe eine zweite Kapazität (C2), eine zweite Inverterstufe (I2), sowie einen dritten und vierten Feldeffekttransistor ersten Typs (N3, N4) enthält, daß ein erster Anschluß der zweiten Kapazität (C2) an einem Ausgang der zweiten Inverterstufe (I2) und ein zweiter Anschluß der zweiten Kapazität (C2) über den dritten Feldeffekttransistor ersten Typs (N3) mit Masse (GND) verbunden ist, daß der zweite Anschluß der zweiten Kapazität (C2) über den vierten Feldeffekttransistor ersten Typs (N4) mit dem zweiten Bezugspotential ($V_{SS}$) und die zweite Inverterstufe (I2) zwischen dem ersten Bezugspotential ($V_{DD}$) und Masse (GND) geschaltet ist, daß ein Eingang der zweiten Inverterstufe (I2) einen Eingang der zweiten Stufe und ein Gateanschluß des dritten Feldeffekttransistors ersten Typs (N3) einen dritten Steuereingang und ein Gateanschluß des vierten Feldeffekttransistors ersten Typs (N4) einen vierten Steuereingang bilden, daß ein Substratanschluß des dritten Feldeffekttransistors ersten Typs (N3) mit dem zweiten Anschluß der zweiten Kapazität (C2) und ein Substratanschluß des vierten Feldeffekttransistors ersten Typs (N4) mit dem zweiten Bezugspotential ($V_{SS}$) verschaltet ist, daß ein Taktausgang (ØA) des Pegelumsetzers (PU) auf einen Eingang einer dritten Inverterstufe (I3) und auf den ersten und vierten Steuereingang geschaltet ist, und der zweite und dritte Steuereingang mit einem Ausgang der dritten Inverterstufe (I3) verschaltet ist, daß der Eingang der ersten Stufe auf einen Ausgang einer vierten Inverterstufe (I4) und der Eingang der zweiten Stufe mit einem Eingang der vierten Inverterstufe (I4) und mit einem Takt-ein-

gang (ØE) des Pegelumsetzers verbunden ist, daß die vierte Inverterstufe (I4) zwischen dem ersten Bezugspotential ($V_{DD}$) und Masse (GND) verschaltet ist und daß der Eingang der vierten Inverterstufe (I4) einen Takteingang (Ø) der mehrstufigen Spannungsvervielfachungsschaltung bildet und daß die dritte Inverterstufe (I3) zwischen dem Ausgang der Spannungsvervielfachungsschaltung und dem ersten Bezugspotential ($V_{DD}$) verschaltet ist, daß der Pegelumsetzer (PU) mit dem ersten und zweiten Bezugspotential ($V_{DD}$, $V_{SS}$) und Masse (GND) anzuschließen ist und daß ein Ausgang der zweistufigen Spannungsvervielfachungsschaltung mit dem zweiten Bezugspotential ($V_{SS}$) verschaltet ist.

2. Mehrstufige Spannungsvervielfachungsschaltung nach Anspruch 1, **dadurch gekennzeichnet,** daß eine dritte Kapazität (C3) zur Glättung zwischen der Masse (GND) und dem zweiten Bezugspotential ($V_{SS}$) angeschlossen ist.

3. Mehrstufige Spannungsvervielfachungsschaltung nach einem der Ansprüche 1 oder 2, **dadurch gekennzeichnet,** daß auf die erste und zweite Stufe (ST1, ST2) eine dritte und vierte Stufe (ST3, ST4) folgt, daß die dritte und vierte Stufe eine fünfte und sechste Inverterstufe (I5, I6), einen achten, neunten, zehnten und elften Feldeffekttransistor ersten Typs (N8, N9, N10 und N11) und eine vierte und fünfte Kapazität (C4, C5) enthält, daß der zweite und dritte Steuereingang mit einem Eingang der fünften Inverterstufe (I5) und der erste und vierte Steueranschluß mit einem Eingang der sechsten Inverterstufe (I6) verbunden ist, daß die fünfte und sechste Inverterstufe jeweils zwischen dem ersten Bezugspotential ($V_{DD}$) und dem zweiten Bezugspotential ($V_{SS}$) geschaltet ist, daß die vierte Kapazität (C4) an einem ersten Anschluß mit einem Ausgang der fünften Inverterstufe (I5) und mit einem zweiten Anschluß über einen achten Feldeffekttransistor ersten Typs (N8) mit dem zweiten Bezugspotential ($V_{SS}$) verschaltet ist und daß die fünfte Kapazität (C5) mit einem ersten Anschluß mit einem Ausgang der sechsten Inverterstufe (I6) und mit einem zweiten Anschluß über den zehnten Feldeffekttransistor ersten Typs (N10) mit dem zweiten Bezugspotential ($V_{SS}$) verbunden ist, daß ein Substratanschluß des achten Feldeffekttransistors ersten Typs (P8) mit dem zweiten Anschluß der vierten Kapazität (C4) und ein Substratanschluß des zehnten Feldeffekttransistors ersten Typs (N10) mit dem zweiten Anschluß der fünften Kapazität (C5) verschaltet ist, daß zwischen der vierten Kapazität (C4) und einem dritten Bezugspunkt ($V_{KK}$) der neunte Feldeffekttransistor ersten Typs (N9) und zwischen der fünften Kapazität (C5) und dem dritten Bezugspotential ($V_{KK}$) der elfte Feldeffekttransistor ersten Typs (N11) angeschlossen ist, daß ein Substratanschluß des neunten und des elften Feldeffekttransistors ersten Typs (N9, N11) mit dem dritten Bezugspotential ($V_{KK}$) verschaltet ist, daß ein Gateanschluß des achten Feldeffekttransistors ersten Typs (N8) und ein Gateanschluß des elften Feldeffekttransistors ersten Typs (N11) als fünfter und achter Steueranschluß gemeinsam mit dem Taktausgang (ØA) des Pegelumsetzers (PU) und ein Gateanschluß des neunten Feldeffekttransistors ersten Typs und des zehnten Feldeffekttransistors ersten Typs (N9, N10) als siebter und achter Steueranschluß gemeinsam mit dem Ausgang der dritten Inverterstufe (I3) verbunden ist, daß der Ausgang der vierstufigen Spannungsvervielfachungsschaltung mit dem dritten Bezugspotential ($V_{KK}$) verschaltet ist.

4. Spannungsvervielfachungsschaltung nach Anspruch 3, **dadurch gekennzeichnet,** daß eine sechste Kapazität (C6) zur Glättung zwischen der Masse (GND) und dem dritten Bezugspotential ($V_{KK}$) angeschlossen ist.

5. Mehrstufige Spannungsvervielfachungsschaltung nach einem der Ansprüche 1 bis 4, **dadurch gekennzeichnet,** daß der Pegelumwandler (PU) einen fünften, sechsten und siebten Feldeffekttransistor ersten Typs (N5, N6, N7) und einen ersten, zweiten und dritten Feldeffekttransistor (P1, P2, P3) zweiten Typs enthält, daß ein erster Anschluß und ein Substratanschluß des fünften Feldeffekttransistors ersten Typs (N5) und ein erster Anschluß und Substratanschluß des sechsten Feldeffekttransistors ersten Typs (N6) mit dem Ausgang der mehrstufigen Spannungsvervielfachungsschaltung verschaltet ist, daß ein Gateanschluß des fünften Feldeffekttransistors ersten Typs (N5) und ein zweiter Anschluß des sechsten Feldeffekttransistors ersten Typs (N6) und ein erster Anschluß des ersten Feldeffekttransistors zweiten Typs (P1) den Ausgang (ØA) des Pegelumsetzers (PU) darstellen, daß ein Gateanschluß des sechsten Feldeffekttransistors ersten Typs (N6) mit einem zweiten Anschluß des fünften Feldeffekttransistors ersten Typs (N5) und einem ersten Anschluß des zweiten Feldeffekttransistors zweiten Typs (P2) zu verbinden ist, daß ein erster Anschluß und Substratanschluß des siebten Feldeffekttransistors ersten Typs (N7) mit der Masse (GND) und ein zweiter Anschluß desselbigen mit einem Gateanschluß des zweiten Feldeffekttransistors zweiten Typs (P2) und einem ersten Anschluß des dritten Feldeffekttransistors zweiten Typs (P3) zu verbinden ist, daß ein zweiter Anschluß und Substratanschluß des dritten Feldeffekttransistors zweiten Typs (P3), ein zweiter Anschluß und Substratanschluß des zweiten Feldeffekttransistors zweiten Typs (P2) und ein zweiter Anschluß und Substratanschluß des ersten Feldeffekttransistors zweiten Typs (P1) mit dem ersten Bezugspotential ($V_{DD}$) verbunden ist, daß ein Gateanschluß des dritten Feldeffekttransistors zweiten Typs (P3) und ein Gateanschluß des siebten Feldeffekttransistors ersten Typs (N7) gemeinsam in den Takteingang (ØE) des Pegelumsetzers (PU) bilden.

6. Mehrstufige Spannungsvervielfachungsschaltung nach einem der Ansprüche 1 bis 4, **dadurch gekennzeichnet,** daß die Inverterstufen einen Feldeffekttransistor ersten Typs und einen Feldeffekttransistor zweiten Typs enthalten, daß ein Gateanschluß des Feldeffekttransistors ersten Typs und ein Gateanschluß des Feldeffekttransistors zweiten Typs den Eingang der Inverterschaltung und ein erster Anschluß des Feldeffekttransistors ersten Typs und ein erster Anschluß des Feldeffekttransistors zweiten Typs gemeinsam den Ausgang der Inverterstufe bilden, daß ein zweiter Anschluß und ein Substratanschluß des Feldeffekttransistors ersten Typs mit Masse (GND) oder mit dem zweiten oder dritten Bezugspotential ($V_{SS}$,$V_{KK}$) verbunden ist und ein zweiter Anschluß und Substratanschluß des Feldeffekttransistors zweiten Typs mit dem ersten Bezugspotential ($V_{DD}$) zu verbinden ist.

7. Mehrstufige Spannungsvervielfachungsschaltung nach einem der Ansprüche 1 bis 6, **dadurch gekennzeichnet,** daß die Feldeffekttransistoren ersten Typs n-Kanal-Feldeffekttransistoren und die Feldeffekttransistoren zweiten Typs p-Kanal-Feldeffekttransistoren sind, daß das erste Bezugspotential ($V_{DD}$) eine positive Versorgungsspannung und das zweite und dritte Bezugspotential ($V_{SS}$, $V_{KK}$) eine negative Spannung darstellt.

8. Mehrstufige Spannungsvervielfachungsschaltung nach einem der Ansprüche 1 bis 6, **dadurch gekennzeichnet,** daß die Feldeffekttransistoren ersten Typs p-Kanal-Feldeffekttransistoren und die Feldeffekttransistoren zweiten Typs n-Kanal-Feldeffekttransistoren sind, daß das erste Bezugspotential ($V_{DD}$) eine negative Versorgungsspannung und das zweite und dritte Bezugspotential ($V_{SS}$, $V_{KK}$) eine positive Spannung darstellt.

**Claims**

1. Multi-stage voltage multiplier circuit having a level converter (PU) and connected inverter stage (I3), the first stage (ST1) of the multi-stage voltage multiplier circuit containing a first capacitor (C1), a first inverter stage (I1), and first and second field-effect transistors (N1, N2) of a first type, a first terminal of the first capacitor (C1) being connected to an output of the first inverter stage (I1) and a second terminal of the first capacitor (C1) being connected via the first field-effect transistor of the first type (N1) to earth (GND), the second terminal of the first capacitor (C1) being connected via the second field-effect transistor of the first type (N2) to a second reference potential ($V_{SS}$) and the first inverter stage (I1) being connected between the first reference potential ($V_{DD}$) and earth (GND), an input of the first inverter stage (I1) forming an input of the first stage and a gate terminal of the first field-effect transistor of the first type (N1) forming a first control input and a gate terminal of the second field-effect transistor of the first type (N2) forming a second control input of the first stage, a substrate terminal of the first field-effect transistor of the first type (N1) being connected to the second terminal of the first capacitor (C1) and a substrate terminal of the second field-effect transistor of the first type (N2) being connected to the second reference potential ($V_{SS}$), characterized in that a second stage contains a second capacitor (C2), a second inverter stage (I2) and also a third and fourth field-effect transistor of the first type (N3, N4), in that a first terminal of the second capacitor (C2) is connected to an output of the second inverter stage (I2) and a second terminal of the second capacitor (C2) is connected via the third field-effect transistor of the first type (N3) to earth (GND), in that the second terminal of the second capacitor (C2) is connected via the fourth field-effect transistor of the first type (N4) to the second reference potential ($V_{SS}$) and the second inverter stage (I2) is connected between the first reference potential ($V_{DD}$) and earth (GND), in that an input of the second inverter stage (I2) forms an input of the second stage and a gate terminal of the third field-effect transistor of the first type (N3) forms a third control input and a gate terminal of the fourth field-effect transistor of the first type (N4) forms a fourth control input, in that a substrate terminal of the third field-effect transistor of the first type (N3) is connected to the second terminal of the second capacitor (C2) and a substrate terminal of the fourth field-effect transistor of the first type (N4) is connected to the second reference potential ($V_{SS}$), in that a clock output ($\Phi A$) of the level converter (PU) is connected to an input of a third inverter stage (I3) and to the first and fourth control inputs, and the second and third control inputs are connected to an output of the third inverter stage (I3), in that the input of the first stage is connected to an output of a fourth inverter stage (I4) and the input of the second stage is connected to an input of the fourth inverter stage (I4) and to a clock input ($\Phi E$) of the level converter, in that the fourth inverter stage (I4) is connected between the first reference potential ($V_{DD}$) and earth (GND) and in that the input of the fourth inverter stage (I4) forms a clock input ($\Phi$) of the multistage voltage multiplier circuit and in that the third inverter stage (I3) is connected between the output of the voltage multiplier circuit and the first reference potential ($V_{DD}$), in that the level converter (PU) is to be connected to the first and second reference potentials ($V_{DD}$, $V_{SS}$) and earth (GND) and in that an output of the two-stage voltage multiplier circuit is connected to the second reference potential ($V_{SS}$).

2. Multi-stage voltage multiplier circuit according to Claim 1, characterized in that a third capacitor (C3), for smoothing, is connected between earth (GND) and the second reference potential ($V_{SS}$).

3. Multi-stage voltage multiplier circuit according to one of Claims 1 or 2, characterized in that the first and second stages (ST1, ST2) are followed by a third and fourth stage (ST3, ST4), in that the third and fourth stages contain a fifth and sixth inverter stage (I5, I6), an eighth, ninth, tenth and eleventh field-effect transistor of the first type (N8, N9, N10 and N11) and a fourth and fifth capacitor (C4, C5), in that the second and third control inputs are connected to an input of the fifth inverter stage (I5) and the first and fourth control terminals are connected to an input of the sixth inverter stage (I6), in that the fifth and sixth inverter stages are in each case connected between the first reference potential ($V_{DD}$) and the second reference potential ($V_{SS}$), in that the fourth capacitor (C4) is connected at a first terminal to an output of the fifth inverter stage (I5) and by a second terminal via an eighth field-effect transistor of the first type (N8) to the second reference potential ($V_{SS}$) and in that the fifth capacitor (C5) is connected by a first terminal to an output of the sixth inverter stage (I6) and by a second terminal via the tenth field-effect transistor of the first type (N10) to the second reference potential ($V_{SS}$), in that a substrate terminal of the eighth field-effect transistor of the first type (P8) is connected to the second terminal of the fourth capacitor (C4) and a substrate terminal of the tenth field-effect transistor of the first type (N10) is connected to the second terminal of the fifth capacitor (C5), in that the ninth field-effect transistor of the first type (N9) is connected between the fourth capacitor (C4) and a third reference point ($V_{KK}$) and the eleventh field-effect transistor of the first type (N11) is connected between the fifth capacitor (C5) and the third reference potential ($V_{KK}$), in that a substrate terminal of the ninth and eleventh field-effect transistors of the first type (N9, N11) is connected to the third reference potential ($V_{KK}$), in that a gate terminal of the eighth field-effect transistor of the first type (N8) and a gate terminal of the eleventh field-effect transistor of the first type (N11) are jointly connected as fifth and eighth control terminals to the clock output ($\Phi A$) of the level converter (PU) and a gate terminal of the ninth field-effect transistor of the first type and a gate terminal of the tenth field-effect transistor of the first type (N9, N10) are jointly connected as seventh and eighth control terminals to the output of the third inverter stage (I3) and in that the output of the four-stage voltage multiplier circuit is connected to the third reference potential ($V_{KK}$).

4. Voltage multiplier circuit according to Claim 3, characterized in that a sixth capacitor (C6), for smoothing, is connected between earth (GND) and the third reference potential ($V_{KK}$).

5. Multi-stage voltage multiplier circuit according to one of Claims 1 to 4, characterized in that the level converter (PU) contains a fifth, sixth and seventh field-effect transistor of the first type (N5, N6, N7) and a first, second and third field-effect transistor (P1, P2, P3) of the second type, in that a first terminal and a substrate terminal of the fifth field-effect transistor of the first type (N5) and a first terminal and substrate terminal of the sixth field-effect transistor of the first type (N6) are connected to the output of the multi-stage voltage multiplier circuit, in that a gate terminal of the fifth field-effect transistor of the first type (N5) and a second terminal of the sixth field-effect transistor of the first type (N6) and a first terminal of the first field-effect transistor of the second type (P1) represent the output (ΦA) of the level converter (PU), in that a gate terminal of the sixth field-effect transistor of the first type (N6) is to be connected to a second terminal of the fifth field-effect transistor of the first type (N5) and to a first terminal of the second field-effect transistor of the second type (P2), in that a first terminal and substrate terminal of the seventh field-effect transistor of the first type (N7) are to be connected to earth (GND) and a second terminal of the same is to be connected to a gate terminal of the second field-effect transistor of the second type (P2) and to a first terminal of the third field-effect transistor of the second type (P3), in that a second terminal and substrate terminal of the third field-effect transistor of the second type (P3), a second terminal and substrate terminal of the second field-effect transistor of the second type (P2) and a second terminal and substrate terminal of the first field-effect transistor of the second type (P1) are connected to the first reference potential (V$_{DD}$) and in that a gate terminal of the third field-effect transistor of the second type (P3) and a gate terminal of the seventh field-effect transistor of the first type (N7) jointly form the clock input (ΦE) of the level converter (PU).

6.  Multi-stage voltage multiplier circuit according to one of Claims 1 to 4, characterized in that the inverter stages contain a field-effect transistor of the first type and a field-effect transistor of the second type, in that a gate terminal of the field-effect transistor of the first type and a gate terminal of the field-effect transistor of the second type form the input of the inverter circuit and a first terminal of the field-effect transistor of the first type and a first terminal of the field-effect transistor of the second type jointly form the output of the inverter stage, in that a second terminal and a substrate terminal of the field-effect transistor of the first type are connected to earth (GND) or to the second or third reference potential (V$_{SS}$, V$_{KK}$) and a second terminal and substrate terminal of the field-effect transistor of the second type are to be connected to the first reference potential (V$_{DD}$).

7.  Multi-stage voltage multiplier circuit according to one of Claims 1 to 6, characterized in that the field-effect transistors of the first type are n-channel field-effect transistors and the field-effect transistors of the second type are p-channel field-effect transistors, in that the first reference potential (V$_{DD}$) represents a positive supply voltage and the second and third reference potentials (V$_{SS}$, V$_{KK}$) represent a negative voltage.

8.  Multi-stage voltage multiplier circuit according to one of Claims 1 to 6, characterized in that the field-effect transistors of the first type are p-channel field-effect transistors and the field-effect transistors of the second type are n-channel field-effect transistors, in that the first reference potential (V$_{DD}$) represents a negative supply voltage and the second and third reference potentials (V$_{SS}$, V$_{KK}$) represent a positive voltage.

**Revendications**

1.  Circuit multiplicateur de tension à plusieurs étages comportant un premier convertisseur de niveau (PU) et un étage inverseur relié (I3), du type dans lequel le premier étage (ST1) du circuit multiplicateur de tension à plusieurs étages comporte une première capacité (C1), un premier étage inverseur (I1) et des premier et deuxième transistors à effet de champ (N1, N2) de premier type, et du type dans lequel une première borne de la première capacité (C1) est connectée à une sortie du premier étage inverseur (I1), et une seconde borne de la première capacité (C1) est reliée à la masse (GND), par l'intermédiaire du premier transistor à effet de champ de premier type (N1), et du type dans lequel la seconde borne de la première capacité (C1) est connectée, par l'intermédiaire du deuxième transistor à effet de champ de premier type (N2), à un second potentiel de référence (V$_{SS}$),et le premier étage inverseur (I1) est branché entre le premier potentiel de référence (V$_{DD}$) et la masse (GND), et du type dans lequel une entrée du premier étage inverseur (I1) forme une entrée du premier étage, une borne de grille du premier transistor à effet de champ de premier type (N1) forme une première entrée de commande, et une borne de grille du deuxième transistor à effet de champ de premier type (N2) forme une seconde entrée de commande du premier étage, et du type dans lequel une borne de substrat du premier transistor à effet de champ de premier type (N1) est connectée à la seconde borne de la première capacité (C1), et une borne de substrat du deuxième transistor à effet de champ de premier type (N2) est connectée au second potentiel de référence (V$_{SS}$), caractérisé par le fait qu'un second étage comporte une deuxième capacité (C2), un deuxième étage inverseur (I2) ainsi que des troisième et quatrième transistors à effet de champ de premier type (N3, N4), qu'une première borne de la deuxième capacité (C2) est reliée à une sortie du deuxième étage inverseur (I2) et qu'une seconde borne de la deuxième capacité (C2) est connectée à la masse (GND), par l'intermédiaire du troisième transistor à effet de champ de premier type (N3), que la seconde borne de la deuxième capacité (C2) est reliée, par l'intermédiaire du quatrième transistor à effet de champ de premier type (N4) au second potentiel de référence (V$_{SS}$) et que le deuxième étage inverseur (I2) est branché entre le premier potentiel de référence (V$_{DD}$) et la masse (GND), qu'une entrée du deuxième étage inverseur (I2) forme une entrée du deuxième étage, une borne de grille du troisième transistor à effet de champ de premier type (N3) forme une troisième entrée de commande, et une borne de grille du quatrième transistor à effet de champ de premier type (N4) forme une quatrième entrée de commande, qu'une borne de substrat du troisième transistor à effet de champ de premier type (N3) est connectée à la seconde borne de la deuxième capacité (C2) et qu'une borne de substrat du quatrième transistor à effet de champ de premier type (N4) est reliée au second potentiel de référence (V$_{SS}$), qu'une sortie de cadence ($\phi$A) du convertisseur de niveau (PU) est reliée à une entrée d'un troisième étage inverseur (I3) et aux première et quatrième entrées de commande, et que les deuxième et troisième entrées de commande sont reliées à une sortie du troisième étage inverseur (I3), que l'entrée du premier étage est reliée à une sortie d'un quatrième étage inverseur (I4) et que l'entrée du deuxième étage est reliée à une entrée du quatrième étage inverseur (I4) et à une entrée de cadence ($\phi$E) du convertisseur de niveau, que le quatrième étage inverseur (I4) est branché entre le premier potentiel de référence (V$_{DD}$) et la masse (GND), et que l'entrée du quatrième étage inverseur (I4) forme une entrée de cadence ($\phi$) du circuit multiplicateur de tension à plusieurs étages, que le troisième étage inverseur (I3) est branché entre la sortie du circuit multiplicateur de tension et le premier potentiel de référence (V$_{DD}$), que le convertisseur de niveau (PU) est reliée aux premier et second potentiels de référence (V$_{DD}$, V$_{SS}$) et la masse (GND), et qu'une sortie du circuit multiplicateur de tension à deux étages est reliée au second potentiel de référence (V$_{SS}$).

2. Circuit multiplicateur de tension à plusieurs étages suivant la revendication 1, caractérisé par le fait qu'une troisième capacité (C3) utilisée pour le lissage est branchée entre la masse (GND) et le second potentiel de référence (V$_{SS}$).

3. Circuit multiplicateur de tension à plusieurs étages selon l'une des revendications 1 ou 2, caractérisé par le fait que les premier et deuxième étages (ST1, ST2) sont suivis par des troisième et quatrième étages (ST3, ST4), que les troisième et quatrième étages comportent des cinquième et sixième étages inverseurs (I5, I6), des huitième, neuvième, dixième et onzième transistors à effet de champ de premier type (N8, N9, N10 et N11), et des quatrième et cinquième capacités (C4, C5), que les deuxième et troisième entrées de commande sont reliées à une entrée du cinquième étage inverseur (I5) et que les première et quatrième bornes de commande sont reliées à une entrée du sixième étage inverseur (I6), que les cinquième et sixième étages inverseurs sont connectés respectivement entre le premier potentiel de référence (V$_{DD}$) et le second potentiel de référence (V$_{SS}$), que la quatrième capacité (C4) est reliée, par une première borne, à une sortie du cinquième étage inverseur (I5) et, par une seconde borne, par l'intermédiaire d'un huitième transistor à effet de champ de premier type (N8), au second potentiel de référence (V$_{SS}$), et que la cinquième capacité (C5) est reliée, par une première borne, à une sortie du sixième étage inverseur (I6) et, par une seconde borne, par l'intermédiaire du dixième transistor à effet de champ de premier type (N10), au second potentiel de référence (V$_{SS}$),qu'une borne de substrat du huitième transistor à effet de champ de premier type (N8) est reliée à la seconde borne de la quatrième capacité (C4), et qu'une borne de substrat du dixième transistor à effet de champ de premier type (N10) est reliée à la seconde borne de la cinquième capacité (C5), que le neuvième transistor à effet de champ de premier type (N9) est branché entre la quatrième capacité (C4) et un troisième point de référence (V$_{KK}$), et que le onzième transistor à effet de champ de premier type (N11) est branché entre la cinquième capacité (C5) et le troisième potentiel de référence (V$_{KK}$), qu'une borne du substrat des neuvième et onzième transistors à effet de champ de premier type (N9, N11) est reliée au troisième potentiel de référence (V$_{KK}$),qu'une borne de grille du huitième transistor à effet de champ de premier type (N8) et une borne de grille du onzième transistor à effet de champ de premier type (N11) sont reliés, en tant que cinquième et huitième bornes de commande, en commun à la sortie de cadence ($\phi$A) du convertisseur de niveau (PU) et que des bornes de grille respectives du neuvième transistor à effet de champ de premier type et du dixième à effet de champ de premier type (N9, N10) sont reliées, en tant que septième et huitième bornes de commande, en commun à la sortie du troisième étage inverseur (I3), et que la sortie du circuit multiplicateur de tension à quatre étages est reliée au troisième potentiel de référence ($V_{KK}$).

4. Circuit multiplicateur de tension suivant la revendication 3, caractérisé par le fait qu'une sixième capacité (C6) utilisée pour le lissage est branchée entre la masse (GND) et le troisième potentiel de référence ($V_{KK}$).

5. Circuit multiplicateur de tension à plusieurs étages suivant l'une des revendications 1 à 4, caractérisé par le fait que le convertisseur de niveau (PU) comporte des cinquième, sixième et septième transistors à effet de champ de premier type (N5, N6, N7) et des premier, deuxième et troisième transistors à effet de champ (P1, P2, P3) de second type, qu'une première borne et une borne de substrat du cinquième transistor à effet de champ de premier type (N5) et une première borne et une borne de substrat du sixième transistor à effet de champ de premier type (N6) sont reliées à la sortie du circuit multiplicateur de tension à plusieurs étages, qu'une borne de grille du cinquième transistor à effet de champ de premier type (N5) et une seconde borne du sixième transistor à effet de champ de premier type (N6) et une borne du premier transistor à effet de champ de second type (P1) constituent la sortie ($\phi$A) du convertisseur de niveau (PU), qu'une borne de grille du sixième transistor à effet de champ de premier type (N6) peut être reliée à une seconde borne du cinquième transistor à effet de champ de premier type (N5) et à une première borne du deuxième transistor à effet de champ de second type (P2), qu'une première borne et une borne de substrat du septième transistor à effet de champ de premier type (N7) peut être reliée à la masse (GND) et qu'une seconde borne de ce même transistor peut être reliée à une borne de grille du deuxième transistor à effet de champ de second type (P2) et à une première borne du troisième transistor à effet de champ de second type (P3), qu'une seconde borne et une borne de substrat du troisième transistor à effet de champ de second type (P3), une seconde borne et une borne de substrat du deuxième transistor à effet de champ de second type (P2) et une seconde borne et une borne de substrat du premier transistor à effet de champ de second type (P1) sont reliées au premier potentiel de référence ($V_{DD}$), et qu'une borne de grille du troisième transistor à effet de champ de second type (P3) et une borne de grille du septième transistor à effet de champ de premier type (N7) forment en commun l'entrée de cadence ($\phi$E) du convertisseur de niveau (PU).

6. Circuit multiplicateur de tension à plusieurs étages suivant l'une des revendications 1 à 4, caractérisé par le fait que les étages inverseurs comportent un transistor à effet de champ de premier type et un transistor à effet de champ de second type, qu'une borne de grille du transistor à effet de champ de premier type et une borne de grille du transistor à effet de champ de second type forment l'entrée du circuit inverseur, qu'une première borne du transistor à effet de champ de premier type et une première borne du transistor à effet de champ de second type forment en commun la sortie de l'étage inverseur, qu'une seconde borne et une borne de substrat du transistor à effet de champ de premier type sont reliées à la masse (GND) ou au second ou au troisième potentiel de référence ($V_{SS}$, $V_{KK}$), et qu'une seconde borne et une borne de substrat du transistor à effet de champ de second type peuvent être reliées au premier potentiel de référence ($V_{DD}$).

7. Circuit multiplicateur de tension à étages multiples suivant l'une des revendications 1 à 6, caractérisé par le fait que les transistors à effet de champ de premier type sont des transistors à effet de champ à canal n et que les transistors à effet de champ de second type sont des transistors à effet de champ à canal p, que le premier potentiel de référence ($V_{DD}$) est une tension d'alimentation positive et que les second et troisième potentiels de référence ($V_{SS}$, $V_{KK}$) représentent une tension négative.

8. Circuit multiplicateur de tension à plusieurs étages suivant l'une des revendications 1 à 6, caractérisé par le fait que les transistors à effet de champ de premier type sont des transistors à effet de champ à canal p et que les transistors à effet de champ de second type sont des transistors à effet de champ à canal n, que le premier potentiel de référence ($V_{DD}$) est une tension d'alimentation négative et que les second et troisième potentiels de référence ($V_{SS}$, $V_{KK}$) représentent une tension positive.

# FIG 1

# FIG 3

13

# FIG 2

EP 0 363 715 B1